Europäisches Patentamt

(19) European Patent Office

Office européen des brevets

(11) Publication number: **0 002 037**
**B1**

(12) **EUROPEAN PATENT SPECIFICATION**

(45) Date of publication of patent specification: **06.04.83**

(51) Int. Cl.³: **B 65 B 3/04, A 23 C 9/12**

(21) Application number: **78101341.2**

(22) Date of filing: **09.11.78**

(54) **Method for filling containers with sundae-style yogurt.**

(30) Priority: **10.11.77 US 850410**
**28.08.78 US 937596**

(43) Date of publication of application:
**30.05.79 Bulletin 79/11**

(45) Publication of the grant of the patent:
**06.04.83 Bulletin 83/14**

(84) Designated Contracting States:
**BE CH DE FR GB NL SE**

(56) References cited:
**DE - A - 2 500 224**
**US - A - 3 269 842**

**JOURNAL OF DAIRY SCIENCE, vol. 59, no. 2**
**(1976—2)**
**MANFRED KROGER "Quality of yoghurt"**
**Department of Food Science, The Pennsylvania**
**State University, University Park 16802**

(73) Proprietor: **Stussi, William Eugene**
**8508 Roanoke Road**
**San Gabriel California 91775 (US)**

(72) Inventor: **Stussi, William Eugene**
**8508 Roanoke Road**
**San Gabriel California 91775 (US)**

(74) Representative: **Patentanwälte Dipl.-Ing. A.**
**Grünecker, Dr.-Ing. H. Kinkeldey, Dr.-Ing. W.**
**Stockmair,**
**Dr. rer. nat. K. Schumann, Dipl.-Ing. P. Jakob, Dr.**
**rer. nat. G. Bezold Maximilianstrasse 43**
**D-8000 München 22 (DE)**

Courier Press, Leamington Spa, England

Method for filling containers with sundae–style yoghurt

This invention relates to methods for adding fruit or similar flavors to yoghurt, and to techniques for filling containers with "sundae-style" yoghurt in which a top layer of fruit preserves overlies yoghurt in the bottom of a container, and in which the fruit preserves are immediately inside a lid which closes the top of the container.

This invention relates more particularly to a process of filling containers with fruit-on-the-top sundae-style yoghurt, comprising the steps of providing a container having a removable lid which closes one end of the container and having an opening at an opposite end of the container for providing access to the interior of the container, the container being inverted so the lid is positioned at the bottom of the container and the opening is foremost, introducing a bacteriologically inoculated liquid milk fraction through the opening of the inverted container into the interior of the container, sealing the opening of the container, and incubating and subsequently refrigerating the contents of the sealed inverted container, so that fermentation of the milk fraction produces yoghurt.

Yoghurt is a very nutritious dairy product which generally contains cultures of two bacteria (*Lactobacillus bulgaricus* and *Streptococcus themophilis*) that aid in the digestive process. In addition to the basic nutritional value of plain yoghurt, a vast number of consumers will only eat yoghurt that is fruit flavoured, rather than plain yoghurt.

At the present time, fruit flavoured yoghurt is commonly sold in several styles, including a "fruit-on-the-bottom" style in which a layer of fruit preserves is on the bottom of the container and the yoghurt fills the rest of the container, or Swiss style yoghurt in which fruit preserves are folded into pre-set, stabilized batch-processed yoghurt.

The usual procedure for producing fruit-on-the-bottom yoghurt is to initially inject, under pressure, approximately 30—45 grms. of fruit preserves onto the bottom of an empty container on a high speed (120 units per minute) filling line. Immediately thereafter, the remainder of the container is filled with a bacteriologically inoculated, gum stabilized liquid milk, after which the filled container is closed with a removable opaque lid. The filled containers are then cased and incubated for a period of 4 to 8 hours so that fermentation of the culture in the liquid milk produces yoghurt. The containers of yoghurt are then refrigerated to coagulate or solidify the stabilizers in the yoghurt, and the containers are finally shipped to retail stores or markets.

A variety of animal and/or vegetable gum stabilizers are commercially added to the inoculated liquid milk solution to provide a commercially desirable increase in the viscosity of the yoghurt upon incubation and subsequent refrigeration. Such stabilizers have been used in fruit-on-the-bottom and Swiss style fruit flavoured yoghurt.

Stabilizers such as modified corn or tapioca starch are also added to the fruit preserve layer to inhibit bacteria in the yoghurt from attacking sugars in the fruit preserve layer.

Fruit-on-the-bottom yoghurt suffers from a number of disadvantages. There is a major unwillingness on the part of consumers, many of whom are children, to stir up the fruit from the bottom of the container, or to eat only plain yoghurt until reaching the fruit preserve layer at the bottom of the container. Further, during storage, there is an essentially unavoidable "wheying out" of the liquid whey fraction of the yoghurt, in which some of the whey naturally present in the yoghurt separates from the yoghurt and seeps to the bottom of the container. In fruit-on-the-bottom yoghurt, whey that seeps into the bottom of the container reduces the effectiveness of the stabilizers in the fruit layer and dilutes the fruit preserves, converting the fruit layer to an unattractive soupy mass, as well as disrupting the natural flavour of the fruit preserves.

In DE—A—2 500 224, a process for filling containers with yoghurt is disclosed, comprising the steps as indicated above. The container has an opening that can be closed by a cover, such as a sheet of aluminium. The interior of the container has two chambers separated by a divider. The divider is disposed vertically to the longitudinal axis of the container. When filling the container it is disposed such that the opening opposed to the aforementioned opening is uppermost. The liquid milk fraction is filled into the container up to a pre-determined level and the divider is placed on top of the liquid milk fraction. Then the filling opening is closed by a cover. A space of a pre-determined volume is maintained free between the cover and the divider. Means are provided that the distance between the divider and the last mentioned cover is maintained when the container is inverted. The divider is formed such that a fluid communication between the two chambers is possible. After the inoculated milk has curdled, the container is inverted and the curdled milk is supported by the divider whilst the serum can drain into the space between the divider and the bottom. After the cover is removed, the contents of the container can be removed.

The US—A—3 269 842, simply discloses the addition of the fruit fraction to a yoghurt, after the yoghurt has been incubated and refrigerated. This patent specification describes a method for producing Swiss-style yoghurt.

The task to be solved by the invention is to provide a method for preparing and filling containers with sundae-style yoghurt in which a top layer of fruit preserves having a specific gravity greater than that of yoghurt is self-supported by yoghurt in the bottom of the container, and in which the fruit preserves are immediately inside a cover at the top of the container.

This task is solved by a method as it is characterised by the claims.

Prior to this invention, it was not thought possible to commercially produce a container of sundae-style yoghurt in which a top layer of fruit preserves is supported above the yoghurt. The inoculated liquid milk fraction, with or without added stabilizers, is a watery solution, even after the incubation step produces yoghurt (i.e., prior to refrigeration). The milk or yoghurt fraction has a lower specific gravity than the fruit preserves, and therefore the milk or yoghurt fraction (prior to refrigeration) will not support a top layer of fruit preserves. The fruit preserves sink to the bottom of the container. Hence, it has become standard practice in the industry to prepare and market fruit-on-the-bottom yoghurt.

The invention now provides a method for producing a sundae-style yoghurt with a layer of fruits on the top of it.

According to one advantageous embodiment of the invention an edible barrier film is provided at the interface between the fruit fraction and the inoculated liquid milk or yoghurt fraction. The edible barrier inhibits intermingling of the fruit fraction with the milk or yoghurt fraction at the interface between them.

Further advantageous embodiments of the invention are indicated in the subclaims.

The invention will now be described in detail by referring to embodiments and the drawings.

Drawings

FIG. 1 is a schematic diagram illustrating a process for filling containers with sundae-style yoghurt according to principles of this invention;

FIG. 2 is a schematic perspective view, partly in cross-section and partly broken away, showing a first alternative container which can be used in the process illustrated in FIG. 1;

FIG. 3 is a schematic perspective view, partly in cross-section and partly broken away, showing a second alternative container which can be used in the process illustrated in FIG. 1;

FIG. 4 is a schematic perspective view, partly in cross-section and partly broken away, showing a third alternative container which can be used in the process illustrated in FIG. 1;

FIG. 5 is a schematic perspective view, partly in cross-section and partly broken away, illustrating a means for inhibiting intermingling of a fruit fraction at the interface of a liquid milk or yoghurt fraction in the process of FIG. 1; and

FIG. 6 is a schematic perspective view illustrating an alternative process for filling containers with sundae-style yoghurt.

Detailed Description

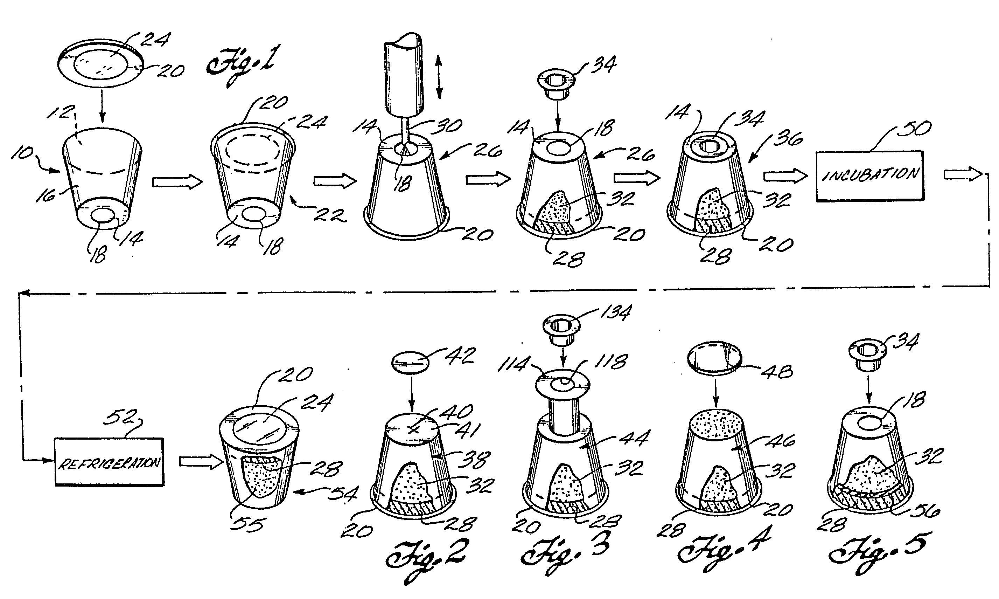

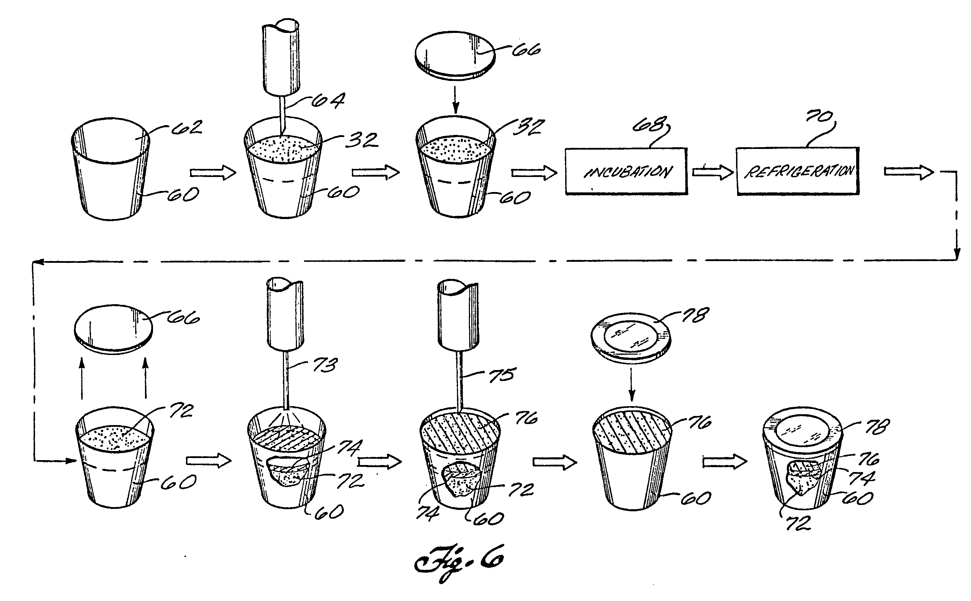

FIG. 1 illustrates a "single-pass" process for filling containers with fruit-on-the-top sundae-style yoghurt in which a set yoghurt in the bottom of a container has a top layer of fruit preserves immediately inside a lid which closes the top of the container. The process of FIG. 1 is practiced with an empty container 10 having an open top 12, a bottom wall 14, a side wall 16 which tapers wider toward the top of the container, and a circular opening 18 formed in the bottom wall 14 of the container. As an alternative to the circular opening 18, the process of FIG. 1 can be practiced with a container 38 (see FIG. 2) having an X-shaped region 40 formed in a bottom wall 41 of the container. The X-shaped region can be a cut, a perforation, a scoreline, or a weakened are preferably located in the center of the container bottom wall 41.

Referring again to FIG. 1, a removable lid 20 is applied to the empty, upright container to provide a closed, empty container 22. The removable lid 20 is preferably the type having a see-through, transparent region 24 preferably in its center, as shown in FIG. 1, or a totally transparent plastic lid. The lid also preferably has a flat inside surface facing the interior of the closed container. The opening 18 provides a means for access to the interior of the closed, empty container 22. The closed, empty container 22 thus has a removable lid with a flat inside surface at one end of the container and an opening in an opposite end of the container spaced from the removable lid.

The closed, empty container is then inverted by running it through a twisted track or tunnel (not shown) to flip the container 180° so that the inside of the transparent lid 20 provides a horizontal floor of the closed, empty container shown in its inverted position at 26 with the opening 18 being spaced above the lid.

A layer of any of a variety of fruit flavoring material 28, hereafter called a fruit fraction, is placed on the inside surface of the lid of the inverted container. The fruit fraction is deposited in a layer of generally uniform thickness in the bottom of the inverted container. The fruit fraction can be a layer of fruit preserves, pieces of fruit cocktail, or any other desired flavoring material. In one embodiment, pieces of fruit cocktail can be deposited in a uniform layer on the inside surface of the lid, and a liquid gelatin solution in desired flavors then can be poured through the opening to the level of the fruit cocktail pieces and the opening 18 can be plugged, after which the inverted container is refrigerated until the gelatin sets.

The fruit preserves can include stabilizers such as low molecular weight, hydrophillic hydrocolloids (e.g., seaweed extractives such as agar-agar, or some bean exudates, such as locust bean gum), or high molecular weight, hydrophobic hydrocolloids (e.g., modified corn or tapioca starches) to inhibit bacteria in the yoghurt from attacking sugars in the fruit preserve layer. The fruit fraction is deposited in the bottom of the inverted container under pressure by a conventional filling nozzle or probe 30. The nozzle is held in a fixed position above the opening 18 in the container, and the fruit preserves are injected as a spray or blast under pressure through the opening in the container bottom wall 14 to deposit the fruit preserves on the inside surface of the lid.

Alternatively, the nozzle can be a conventional air-actuated reciprocal filling nozzle. Such a nozzle can be reciprocally forced down through the X-shaped region 40 of the container shown in FIG. 2 so that the probe momentarily extends into the interior of the container for depositing the fruit fraction on the inside surface of the lid. In the instance where the X-shaped region 40 comprises a previously cut X-shaped opening, the nozzle in its downward movement simply pierces through the X-shaped opening to gain access to the interior of the container for depositing the fruit fraction. Alternatively, the X-shaped region 40 can be a weakened area or a scoreline, and the remote end of the nozzle 30 can be formed as a puncturing device. In its downward movement such a nozzle can puncture an X-shaped opening in the container bottom by punching down on the X-shaped scoreline or weakened area in the container bottom. By forming an X-shaped cut or opening, hinged or flexible right angle portions of the container bottom surround the X-shaped cut or opening. These flexible portions of the container bottom are at least partially closed by the retracting movement of the nozzle 30 away from the opening or cut in the container bottom.

The inverted container 26 then passes to a station for filling the remainder of the container with a bacteriologically inoculated, uncultured, liquid milk fraction 32, preferably with added stabilizers described below. A standard filler nozzle held in a fixed position above the opening 18 is used to inject the liquid milk solution through the opening and into the container interior above the fruit fraction layer. Alternatively, a standard conventional air-actuated reciprocating filling nozzle or probe similar to the nozzle 30 can be used to inject the liquid milk through the opening to penetrate the previously opened X-shaped region in the container bottom to fill the rest of the container with the liquid milk fraction.

The liquid milk fraction preferably is in direct contact with the layer of fruit preserves when the milk fraction fills the container. The liquid milk fraction normally occupies about 80% of the volume of the container, with the balance being the fruit fraction. The layer of fruit preserves remains essentially uniform in thickness while supporting the weight of liquid milk fraction above it. The container can be shaped so that the weight of the liquid milk above the fruit preserve does not disrupt the uniformity of the fruit preserve layer.

Subsequent to filling the inverted container with the fruit fraction 28 and the liquid milk fraction 32, the individual containers continue along a conveyor to a station for automatically inserting a plug 34 in the upwardly facing opening 18 in the container bottom for sealing the opening. Preferably, the plug 34 has a cylindrical body which is slightly oversized to make a tight friction fit in the container opening 18. The plug has an outer flange or lip which overlies the upwardly facing exterior surface of the container bottom wall 14 after the body of the plug is inserted in the opening 18. The overlying flange and oversized body of the plug cooperate to inhibit leakage through the opening when the container is later positioned in its normal upright position. Alternatively, a food grade permanent adhesive-backed, pressure-sensitive label or seal 42 (see FIG. 2) can be adhesively secured or bonded to the container bottom to seal either the opening 18 or the X-shaped region 40. The plug 34 or the seal 42 seals in the contents of the container throughout the remaining processing steps, as well as during shipping, distribution, and consumer use. Such a sealed container is shown in its inverted position at 36.

FIG. 3 illustrates a second alternative container 44 which comprises a hollow stemmed, goblet-shaped plastic cup. In this instance, a bottom flange 114 of the cup has a circular opening 118 which extends through a hollow portion of the stem and into the interior of the container. Reciprocating probes (not shown) can be inserted through the opening 118 to fill the container interior with the fruit fraction 28 and the liquid milk fraction 32. A plug 134 similar to the plug 34 is then inserted in the opening 118 to seal in the contents of the container 44.

The containers shown in FIGS. 1, 2 and 3 facilitate sealing the contents relatively easily and quickly when using the seals 34, 42 and 134, respectively. For example, the circular opening 18 shown in FIG. 1 occupies only a minor portion of the surface area of the container bottom 14. Thus, the remainder of the container bottom provides a rigid base entirely surrounding the opening to which the seal is applied. This facilitates applying the plug 34 in a commercial plugging process, using the rigidity of the plastic container bottom surrounding the opening as a means of support for the flange or lip of the plug. A Resina plugger (Resina Inner-sealer Model L Series, Resina Automatic Machinery Co., Inc., Brooklyn, New York) can be used for automatically inserting the plug 34. This requires only a relatively short amount of time for the sealing step, and thereby aids in avoiding contamination problems which can arise if the container with the inoculated milk fraction is left open for an appreciable length of time. The portions of the container bottoms 41 and 114 shown in FIGS. 2 and 3 provide similar rigidity surrounding the X-shaped region 40 and the opening 118, respectively, during the sealing process.

FIG. 4 illustrates a further alternative container 46 having a completely open bottom facing upwardly when the container is inverted. The container 46 is filled with the fruit fraction 28 and subsequently the liquid milk fraction 32, after which the upwardly facing opening in the container bottom is sealed by bonding a flat bottom wall or disc 48 to the upwardly facing opening of the container. The container shown in FIG. 4 can be sealed by overlaying the container bottom disc 48 and bonding it, say by heat sealing, to the side wall of the container. As an alternative, the bottom opening can be closed by a cap which makes a friction fit with the side wall of the container.

Following the sealing step, the inverted container is placed in an incubator represented at 50 for about 4 to 8 hours at about 37.8°C to 48.9°C so that fermentation of the culture in the liquid milk fraction produces yoghurt. The yoghurt following incubation is still watery and requires refrigeration to solidify the soluble stabilizers in it. The containers with the cultured milk or yoghurt are removed from the incubator and placed in a refrigerator represented at 52. The containers remain in their inverted position during refrigeration which produces yoghurt 55 capable of self-supporting the layer of fruit preserves 28, even through the fruit preserves have a higher specific gravity than the yoghurt. Following refrigeration, the containers are inverted again to their normal upright position shown at 54 to provide a container of sundae-style yoghurt in which the yoghurt 55 is on the bottom of the container and a layer of fruit preserves 28 is on the top of the yoghurt immediately inside the removable transparent lid.

Use of stabilizers in the fruit fraction for inhibiting bacterial attack of the fruit fraction maintains sufficient stratification between the adjacent fruit layer and the yoghurt after the container is placed right-side-up that a commercially desirable appearance of the fruit preserves can be maintained beneath the transparent lid. The sundae-style yoghurt provided by this invention permits the fruit preserve top layer to be viewed either through a transparent lid at the top of the container, or after the lid is removed. This enhances the attractiveness of the yoghurt to the average consumer and can contribute to greater consumer interest, especially when compared with fruit-on-the-bottom yoghurt which is commonly sold in entirely opaque containers having a more sterile, i.e., less attractive appearance to the average consumer.

The liquid milk fraction contains one or more gum stabilizing agents in addition to the bacterial inoculum or culture. The gum stabilizing agents cause the milk solution to gel or solidify upon subsequent refrigeration. Such gum stabilizers are known in the art and can include gelatin of animal origin and a number of gums of vegetable origin, such as agar-agar, locust bean gum, modified starches, and the like. A bacteriologically inoculated liquid milk solution without such added stabilizers will coagulate or set and form yoghurt upon incubation, but the gel strength or viscosity of the yoghurt can be improved by the gum stabilizing agents. The gum stabilizers ensure that the yoghurt will have sufficient gel strength, following incubation and subsequent refrigeration, for self-supporting the more dense layer of fruit preserves.

The fruit-on-the-top yoghurt provided by this invention eliminates dilution of the fruit preserve layer by the whey that separates from the yoghurt upon storage of the yoghurt. When the container of fruit-on-the-top yoghurt is placed in the right-side-up position, say during storage, any whey that separates from the yogurt seeps toward the bottom of the container away from the fruit preserve layer, which avoids any dilution of the fruit preserve layer and its stabilizing agents.

Any whey that separates to the bottom of the container of fruit-on-the-top yoghurt does not cause the yoghurt to settle to the bottom of the container under gravity. The gum stabilizers in the yoghurt provide sufficient gel strength to resist such settling. Further, the tapered or conical configuration of the container can aid in resisting such settling of the yoghurt. As a result, the fruit preserve layer above the yoghurt is maintained against the underside of the transparent lid during prolonged storage in the right-side-up position. Any tendency of the fruit preserve layer to separate and produce a "head space" between the fruit and the inside surface of the lid can reduce the visual attractiveness of the project when viewing it through a transparent lid. Since the fruit preserve layer of this invention can be constantly maintained in contact with the inside surface of the transparent lid, the fruit-on-the-top yoghurt constantly has an attractive appearance when oriented in the right-side-up position.

At the interface between the fruit fraction 28 and the liquid milk fraction 32 there can be intermingling of the two fractions resulting in osmotic pressure differential dilution of the higher soluble solids of the fruit fraction. Although intermingling at the interface is greatly reduced by added stabilizers in the fruit fraction, intermingling of the two fractions at the interface can be further inhibited by providing an optional semi-solid edible barrier 56 at the interface. The edible barrier preferably comprises a water-insoluble material such as a relatively high melting point vegetable oil, such as hydrogenated coconut oil, or hydrogenated animal fat. Preferably, the edible barrier 56 is applied by spraying it in film thickness over the entire surface of the fruit layer in the process of FIG. 1 prior to injecting the liquid milk fraction during filling and incubation is commonly between about 37.8°C to 48.9°C. The melting point temperature of the edible barrier material is higher than the highest temperature of the liquid milk fraction during filling and incubation, preferably above 48.9°C. Thus, when the barrier solution is sprayed over the fruit fraction, it immediately solidifies and remains solidified throughout filling of the container, incubation, refrigeration and consumer use. It thereby provides a barrier which maintains separation and prevents and intermingling between the fruit fraction and the liquid milk or yoghurt fraction.

The process of FIG. 1 is especially useful because it is a "single-pass" process which can be completed within a fraction of a minute, in which the fruit fraction and liquid milk fraction are added immediately before and after one another so that the milk fraction is incubated while the fruit fraction is present inside the container. This avoids any potential for contamination which can otherwise be present if the container is filled only with the liquid milk fraction and then temporarily sealed and incubated in a sterile environment, after which the container must be withdrawn from the sterile environment for adding the fruit fraction.

FIG. 6 illustrates an alternative "double-pass" process for filling containers with a fruit-on-the-top sundae-style yoghurt. According to the process illustrated in FIG. 6, an empty, normally upright container 60 having an open top 62 is partially filled with the stabilized inoculated liquid milk fraction 32 described above. A standard filling nozzle or probe 64 is used to partially fill the container 60 with the liquid milk fraction 32. The top of the container having the liquid milk fraction is then subjected to a sterile environment, say by covering the container with a temporary seal 66. The temporary seal can be an insert of metal, plastic, waxed paper, etc., or a temporary lid, or a piece of plastic film, waxed paper, or metallic film cut from a web, or the sterile environment can be provided by ultraviolet light without a temporary seal, for example. The liquid milk fraction is exposed to the sterile environment by keeping the top of the container covered by the temporary seal 66, for example during the incubation step 68, during which fermentation of the culture in the liquid milk fraction produces yoghurt 72. The temporary seal also seals the contents during the subsequent refrigeration step 70 in which the stabilizers in yoghurt are solidified. The container is then withdrawn from the sterile environment, say by removing the temporary seal 66 after refrigeration.

An optional semi-solid edible barrier 56 described above can be deposited on the top surface of the set yoghurt 72. Preferably, the edible barrier material 74 is applied by a spray head illustrated at 73. The film solidifies owing to its melting point temperature (crystallization point) being at least higher than the temperature of the yoghurt during refrigeration, i.e., above 4.4°C. Preferably, the melting point temperature of the edible barrier is above about 23.9°C to ensure that the film will remain semi-solid during consumer use.

The edible barrier can be applied after refrigeration, or it can be applied to the top of the liquid milk fraction before incubation. In the latter instance, the barrier material can have a melting point of say 23.9°C and still be applied in liquid form to the top of a liquid milk fraction having a temperature between 43.3°C to 48.9°C. In this instance, the barrier film remains in liquid form at the top of the milk fraction, owing to the lower specific gravity of the edible barrier material. Following incubation and during subsequent refrigeration, the barrier film will solidify on the top surface of the yoghurt since the temperature of the yoghurt is lowered below 23.9°C during refrigeration. The fruit fraction then can be added to the top of the solidified edible barrier film.

Following refrigeration of the liquid milk fraction, the container then passes to a standard air-actuated, reciprocal-acting filling nozzle or probe 75 for depositing a stabilized fruit fraction layer 76 on the top surface of the edible barrier material. In absence of the barrier film, the fruit fraction can be deposited directly on top of the set yoghurt, which has sufficient gel strength, following refrigeration, to support the more dense fruit fraction layer. The cup is then capped with a removable transparent lid 78 similar to the lid 20 shown in FIG. 1, and the container is subsequently cased and shipped for marketing.

### Example

More than 500 containers of fruit-on-the-top yoghurt were produced according to the following procedure, wherein the steps for preparing one container of fruit-on-the-top yoghurt will be described. A one-inch circular hole was formed in the bottom of a standard 227 gr conical-shaped plastic cup. The cup was placed in a normal upright position and fed into an automated capper which impressed a removable flat see-through lid over the top of the container. The capped, empty container was then inverted by hand and placed on a conventional dairy conveyor belt for feeding the container to a Bock 300 (Bock-Haskon, Inc., St. Paul, Minnesota) filler-depositor. 30—45 gr of fruit preserves were injected by the depositor through the hole in the upwardly facing bottom wall of the inverted container. The preserves were injected by a fixed (non-retractable) depositor nozzle held about 6.4 mm above the hole in the container bottom. Conveyor and depositor speed was 120 containers per minute and several different types of fruit preserves were injected into the containers. The injected fruit preserves typically covered about 2/3 the area of the inside surface of the lid, and after injection, the container was shaken by hand to uniformly distribute the preserves over the entire surface area of the lid. A conventional merry-go-round Federal Filler was used to fill the remainder of the container with a stabilized, bacteriologically inoculated liquid milk solution. The gum stabilizer used in the liquid milk solution was agar-agar in the amount of about 0.5% of the liquid milk fraction, by weight. Filling speed was 120 cups per minute. After the container was filled, the bottom of the container was hand plugged with a 30.5 mm O.D. plastic plus (identical to plug 34 shown in FIG. 1) which made a tight friction fit inside the hole in the container bottom. The plugger container was left in the inverted position and placed in incubation for 5 hours so that fermentation of the culture in the milk fraction produced yoghurt. The inverted container was then refrigerated overnight at about 4.4°C to solidify the stabilizer and complete coagulation of the yoghurt. Approximately 90% of the solidification of the yoghurt was contributed by the agar-agar stabilizer, and the remaining approximately 10% was contributed by natural gelatinization provided by the fermentation. The container was removed from the refrigerator and inverted to the normal upright position. The fruit preserve layer remained as a separate, discrete layer, self-supported by the set yoghurt, with essentially no intermingling with the yoghurt, and the fruit preserves remained in contact with the inside surface of the transparent lid for a prolonged time period of eight weeks and more.

Thus, the invention provides techniques for filling containers with a fruit-on-the-top sundae-style yoghurt in which the yoghurt and fruit fractions can be deposited in containers quickly and easily in a commercial production line process under conditions which can avoid contamination problems, while producing an end-product in which the fruit fraction remains separated or in a discrete layer supported by the gel strength of the set yoghurt.

**Claims**

1. A process for filling containers with fruit-on-the-top sundae-style yoghurt, comprising the steps of:

providing a container (16) having a removable lid (20) which closes one end of the container and having an opening (18) at an opposite end of the container for providing access to the interior of the container, the container being inverted so the lid is positioned at the bottom of the container and the opening is foremost,

introducing a bacteriologically inoculated liquid milk fraction (32) through the opening of the inverted container into the interior of the container,

sealing the opening of the container, and incubating and subsequently refrigerating the contents of the sealed inverted container so that fermentation of the milk fraction produces yoghurt, characterised in that a fruit fraction (28) is introduced through the opening (18) and into the interior of the inverted container (16) to form a fruit fraction layer on the inside surface of the lid (20), after which the liquid milk fraction (32) is introduced through the opening of the container into the interior of the container above the fruit fraction layer, and in which fermentation of the milk fraction produces yoghurt (55) having sufficient gel strength that, upon subsequently positioning the container in an upright position with the lid foremost, the yoghurt in the bottom of the container self-supports the fruit fraction layer above it.

2. The process according to claim 1, characterised in that the specific gravity of the fruit fraction (28) is greater than the specific gravity of the liquid milk fraction (32).

3. The process according to claims 1 or 2, characterised in that the liquid milk fraction (32) contains a gum stabilizing agent for enhancing solidification of the yoghurt during the refrigeration step.

4. The process according to any of claims 1, 2 or 3, characterised in that the fruit fraction (28) includes a stabilizing agent for inhibiting bacterial attack of the fruit fraction by the liquid milk fraction (32).

5. The process according to any preceding claim, characterised in that the fruit fraction (28) and the liquid milk fraction (32) essentially fill the interior of the container (16).

6. The process according to any preceding claim, characterised in that the opening (18) is sealed by inserting a plug (34) into the opening.

7. The process according to any preceding claim, characterised in that the opening (18) is sealed by a food grade adhesive seal (42) secured to a portion of the container bottom wall (14; 41) surrounding the opening.

8. The process according to any preceding claim, characterised in that an edible barrier material (74) is introduced to the interior of the container above the fruit fraction (28) prior to introducing the inoculated liquid milk fraction (32) for forming an edible barrier film for inhibiting intermingling of the fruit fraction and the liquid milk fraction at the interface between them.

9. The process according to claim 8, characterised in that the edible barrier material (74) comprises a water insoluble material having a melting point temperature of the inoculated liquid milk fraction, and the edible barrier material is selected from the group consisting of hydrogenated animal fats and hydrogenated vegetable oils.

10. The process according to any one of claims 1—7, characterised in that the liquid milk fraction (32), is in direct contact with the fruit fraction (28).

11. The process according to any preceding claim, characterised in that the removable lid (20) is transparent.

12. The process according to claim 11, characterised in that the fruit fraction (28) is in direct contact with the transparent lid (20) after the container (16) is subsequently re-positioned in the upright position.

## Revendications

1. Procédé pour remplir des récipients avec du yaourt aux fruits ayant une couche de fruits sur le dessus qui consiste à prendre un récipient (16) ayant un couvercle amovible ou enlevable (20) qui ferme l'une des extrémités de celui-ce et qui présente une ouverture (18) à son extrémité opposée pour permettre d'accéder à l'intérieur de celui-ci, à retourner ledit récipient de façon que son couvercle soit placé à sa base et que son ouverture soit en avant, à introduire une fraction lactée liquide ensemencée bactériologiquement (32) par l'ouverture du récipient retourné à l'intérieur de celui-ci, à fermer ladite ouverture et à incuber et à refroidir ensuite le contenu du récipient inversé fermé de sorte que la fermentation de la fraction lactée liquide produit du yaourt, caractérisé en ce qu'on introduit une fraction fruitée (28) par l'ouverture (18) et à l'intérieur de récipient retourné (16) pour former une couche de fraction fruitée sur la face intérieure du couvercle (20), après quoi, on introduit la fraction lactée liquide (32) par l'ouverture dudit récipient à l'intérieur de celui-ci, au-dessus de la couche de fraction fruitée, et en ce que la fermentation de la fraction lactée produit un yaourt (55) ayant une consistance suffisante, après que le récipient a été remis debout avec le couvercle en avant, pour que le yaourt remplissant le fond de celui-ci supporte la fraction fruitée sur le dessus.

2. Procédé selon la revendication 1, caractérisé en ce que la densité de la fraction fruitée (28) est plus grande que celle de la fraction lactée liquide (32).

3. Procédé selon la revendication 1 ou 2, caractérisé en ce que la fraction lactée liquide (32) contient un agent de stabilisation pour renforcer la solidification du yaourt durant l'étape de réfrigération.

4. Procédé selon l'une quelconque des revendications 1, 2 ou 3, caractérisé en ce que la fraction fruitée (28) contient un agent de stabilisation destiné à empêcher les bactéries présentes dans la fraction lactée liquide (32) d'attaquer la fraction fruitée.

5. Procédé selon l'une quelconque des revendications précédentes, caractérisé en ce que la fraction fruitée (28) et la fraction lactée (32) remplissent l'intérieur du récipient (16).

6. Procédé selon l'une quelconque des revendications précédentes, caractérisé en ce qu'on ferme l'ouverture (18) en y introduisant un bouchon (34).

7. Procédé selon l'une quelconque des revendications précédentes, caractérisé en ce qu'on ferme l'ouverture (18) par un élément d'étanchéité adhésif de qualité alimentaire (42) fixé à une partie de la paroi de fond du récipient (14, 41) entourant l'ouverture.

8. Procédé selon l'une quelconque des revendications précédentes, caractérisé en ce qu'on introduit une matière (74) produisant une barrière comestible à l'intérieur du récipient, au-dessus de la fraction fruitée (28), avant d'introduire dans celui-ci la fraction lactée liquide ensemencée (32), afin de former une barrière comestible empêchant la fraction fruitée et la fraction lactée liquide de se mélanger à leur interface.

9. Procédé selon la revendication 8, caractérisé en ce que la matière (74) de la barrière comestible est une matière insoluble dans l'eau ayant un point de fusion égal à celui de la fraction lactée liquide ensemencée, et en ce qu'on choisit la matière constituant la barrière comestible dans le groupe comprenant les graisses animales hydrogénées et les huiles végétales hydrogénées.

10. Procédé selon l'une quelconque des revendications 1 à 7, caractérisé en ce que la fraction lactée liquide (32) est directement en contact avec la fraction fruitée (28).

11. Procédé selon l'une quelconque des revendications précédentes, caractérisé en ce que le couvercle amovible (20) est transparent.

12. Procédé selon la revendication 11, caractérisé en ce que la fraction fruitée (28) est directement en contact avec le couvercle transparent (20) après que le récipient (16) a été remis debout.

## Patentansprüche

1. Verfahren zum Füllen von Behältern mit Joghurt, auf dem sich oben Früchte so wie bei Fruchteiscreme befinden, wobei die folgenden Schritte durchgeführt werden: es wird ein Behälter (16) vorgesehen, welcher einen ein Ende des Behälters schließenden, entfernbaren Deckel (20) aufweist und welcher am gegenüberliegenden Ende mit einer Öffnung (18) ausgebildet ist, um Zugang zum Inneren des Behälters zu verschaffen, der Behälter wird umgedreht, so daß der Deckel am Boden des Behälters und die Öffnung oben angeordnet ist, ein bakteriologisch geimpfter Flüssigmilchanteil (32) wird durch die Öffnung des umgedrehten Behälters in das Innere des Behälters eingebracht, die Öffnung des Behälters wird dicht verschlossen, und der Inhalt des dicht abgeschlossenen, umgedrehten Behälters wird gereift und anschließend abgekühlt, so daß die Fermentierung des Milchanteils Joghurt erzeugt, dadurch gekennzeichnet, daß ein Fruchtanteil (28) durch die Öffnung (18) und in das Innere des umgedrehten Behälters (16) eingebracht wird, um eine Fruchanteil-Schicht an der Innenfläche des Deckels (20) zu bilden, woraufhin der Flüssigmilchanteil (32) durch die Öffnung des Behälters in das Innere des Behälters über der Fruchtanteil-Schicht eingebracht wird und eine Fermentierung des Milchanteils Joghurt (55) mit einer ausreichenden Gelfestigkeit erzeugt, woraufhin der Behälter in eine aufrechte Stellung mit nach oben weisendem Deckel angeordnet wird und das Joghurt in dem unteren Teil des Behälters die Fruchanteil-Schicht auf ihm trägt.

2. Verfahren nach Anspruch 1, dadurch gekennzeichnet, daß das spezifische Gewicht des Fruchtanteils (28) größer als das spezifische Gewicht des Flüssigmilchanteils (32) ist.

3. Verfahren nach Anspruch 1 oder 2, dadurch gekennzeichnet, daß der Flüssigmilchanteil (32) ein stabilisierendes Gummimittel enthält, um die Verfestigung des Joghurts während des Abkühlschrittes zu unterstützen.

4. Verfahren nach irgendeinem der Ansprüche 1, 2 oder 3 dadurch gekennzeichnet, daß der Fruchtanteil (28) ein Stabilisierungsmittel enthält, um einen bakteriellen Befall des Fruchanteils durch den Flüssigmilchanteil (32) zu unterbinden.

5. Verfahren nach irgendeinem der vorhergehenden Ansprüche, dadurch gekennzeichnet, daß der Fruchanteil (28) und der Flüssigmilchanteils (32) im wesentlichen das Innere des Behälters (16) füllen.

6. Verfahren nach irgendeinem der vorhergehenden Ansprüche, dadurch gekennzeichnet, daß die Öffnung (18) durch Einführen eines Stöpsels (34) in die Öffnung dich verschlossen wird.

7. Verfahren nach irgendeinem der vorhergehenden Ansprüche, dadurch gekennzeichnet, daß die Öffnung (18) durch einen für den Genuß des Inhalts unschädlichen Klebeverschluß (42) dicht verschlossen wird welcher an einem die Öffnung umgebenden Bereich der Behälterbodenwand (14; 41) befestigt ist.

8. Verfahren nach irgendeinem der vorhergehenden Ansprüche, dadurch gekennzeichnet, daß in das Innere des Behälters von derm Einbringen des geimpften Flüssigmilchanteils (32) auf dem Fruchtanteil (28) ein verzehrbares Trennmaterial (74) eingeführt wird, um eine verzehrbare Trennschicht auszubilden, durch die eine Vermischung des Fruchtanteils und des Flüssigmilchanteils an der Trennschicht zwischen ihnen verhindert wird.

9. Verfahren nach Anspruch 8, dadurch gekennzeichnet, daß das verzehrbare Trennmaterial (74) ein wasserunlösliches Material mit einer Schmelzpunkttemperatur des geimpften Flüssigmilch-Anteils ist und daß das verzehrbare Trennmaterial aus der Gruppe ausgewählt ist, welche gehärtete, tierische Fette und gehärtet, pflanzliche Öle umfaßt.

10. Verfahren nach irgendeinem der Ansprüche 1 bis 7, dadurch gekennzeichnet, daß sich der Flüssigmilchanteil (32) in unmittelbarer Berührung mit dem Fruchanteil (28) befindet.

11. Verfahren nach irgendeinem der vorhergehenden Ansprüche, dadurch gekennzeichnet, daß der entfernbare Deckel (20) durchscheinen ist.

12. Verfahren nach Anspruch 11, dadurch gekennzeichnet, daß sich der Fruchanteil (28) in unmittelbarer Berührung mit dem durchscheinenden Deckl (20) befindet, nachdem der Behälter (16) anschließend wieder in seine aufrechte Stellung gebracht worden ist.

Fig.1

INCUBATION 50

REFRIGERATION 52

Fig.2

Fig.3

Fig.4

Fig.5

0 002 037

*Fig. 6*